# EUROPEAN PATENT SPECIFICATION

(11) **EP 3 363 715 B1**
(45) Date of publication and mention of the grant of the patent: **25.03.2020**
(21) Application number: 17157249.8
(22) Date of filing: 21.02.2017
(51) Int. Cl.: B62D 25/24

(54) **CLOSING PLUG FOR CLOSING AN OPENING**
VERSCHLUSSSTOPFEN ZUM VERSCHLIESSEN EINER ÖFFNUNG
BOUCHON DE FERMETURE POUR FERMER UNE OUVERTURE

(43) Date of publication of application: 22.08.2018
(73) Proprietor: Newfrey LLC, New Britain, CT 06053 (US)
(72) Inventor: Stau, Bastian, 35394 Giessen (DE); Kraus, Willi, 35394 Giessen (DE); Wagner, Tobias, 35394 Giessen (DE)
(74) Representative: SBD IPAdmin

(56) References cited:
- WO-A1-2016/131573
- US-A1- 2006 201 906

## Description

The invention relates to closing plugs for closing openings, in particular in a body structure of an automobile.

Coating processes are frequently used for car bodies. During such process, the car bodies are immersed in coating baths (for example electro coat tanks). This coat protects the car's bodies in particular from corrosion. It can also provide a base for applying subsequent paint layers. Upon removal of the body from the coating bath, the liquid coating material runs off over a plurality of openings formed in the car body. These openings then have to be closed in a sealed manner in order to avoid ingress of water or dirt, and associated damage to the car body, during subsequent manufacturing steps, or even during operation of the car. Furthermore, these openings then have to be closed in a sealed manner since they may constitute so-called sound bridges. To this end, a closing plug is used.

It is known several closing plugs from the state of the art.

DE 10 2009 057 750A1 discloses a closing plug having a shank body and, at opposite ends of the shank body, circumferential flanges formed integrally therewith. When inserted into a body opening, the shank body passes partially through the opening, such that one of the flanges bears against a first body side and the other of the flanges bears against the opposite other body side. A circumferential ring made of expanded hot-melt adhesive material is arranged on the flanges in each case on the side that bears against the body. The hot-melt adhesive material melts by heating and sealingly bonds the respective flange to the body.

In terms of tooling, the known closing plug is complicated to produce and high mounting forces can arise. Furthermore, the configuration of the closing plug does not allow its utilization with different sheet metal thicknesses.

Also known are closing plugs which ensure sealing only on one side of the body part. However, these do not always lead to sufficient protection against water ingress during operation, and so damage to the body, in particular to the rim bounding the opening, can occur.

Document WO2015187239A1 discloses a closing plug which aims to overcome the drawbacks previously mentioned. More particularly, WO2015187239A1 discloses a closing plug comprising a bottom part and a top part which can be connected to the bottom part, wherein the bottom part has a latching section with a connecting receptacle. The latching section can be inserted into the opening, and the top part has a connecting section which can be inserted into the connecting receptacle. The connecting receptacle and/or the connecting section have/has holding means which hold the connecting section in the connecting receptacle. Furthermore, the top part has a cover section which extends starting from one end of the connecting section. The latching means are covered at least partially by an annularly circumferential hot-melt adhesive material which, after heating, sealingly encloses the opening edge which delimits the opening in the state in which said latching means are latched at the opening.

However, closing plugs of this type are dependent from the temperature, since the hot-melt adhesive material has to be heated. This dependence from the temperature may imply strict heating processes. This reduces the adaptability of the closing plugs and complicates their implementation. Besides, these sealing plugs extends well above the diameter of the opening and the sealing interface is realized on the side of the car body, which might decrease their sealing performances.

Other closing plugs independent from the temperature or having a radial sealing exist.

Document US2015135598A1 shows a closing plug for closing an opening, which includes an annular sealing section adapted to rest against an edge of the opening. The closing plug further has an expansion section which is formed in one piece with the sealing section and can be adjusted from a mounting position, in which the sealing section has a mounting diameter at least at one axial end, to an expansion position, in which the sealing section has a larger diameter, the sealing section being axially biased outwardly by transferring the expansion section from the mounting position into the expansion position. The invention is based on the fundamental idea of using a plug which when in the mounting position can be inserted with low force into the opening of the vehicle body and can then, by applying pressure to a portion of the plug in the mounting direction, be adjusted to an expansion position, in which the plug reliably seals against the edge of the opening.

The circumstance that the sealing section of the closing plug initially has a mounting diameter which is smaller than the diameter of the sealing section when in the expansion position allows the closing plug to be inserted into the opening in a simple manner. However, such closing plugs is difficult to adapt to openings having different diameters or different diameter tolerances. Besides, such closing plugs are one-piece part, which might be difficult to manufacture due to their complex geometry.

Document DE102007026544 discloses a closing plugs having at least two different components, and one of the component comprises an expansion element. The expansion element is secured in a locked position through a locking structure. The locking structure comprises three parts which cooperate together to move the expansion element in the locked position.

US20060201906 discloses a closing plug comprising two components for tight closure of an opening with an insert element consisting of a hard component and a lid element which can be locked together in mounted state with the hard component in a center region acting upon an elastic counter region in said center region.

The locking structure of such closing plugs are complex to manufacture and to manipulate. Furthermore, the mounting of such closing plugs in the locked position might require high mounting forces.

The object of the present invention is to go some way towards solving or at least mitigating the problems set out above. The invention aims to provide a robust and compact closing plug suited to a large range of car bodies or other workpieces with a good sealing effect and easy to use and to manufacture.

It is also a goal of the present invention to provide a robust sealing arrangement.

To this aim, according to the invention, it is provided a closing plug for closing an opening, in particular in a body structure of an automobile, having:
- an insert component adapted to be mounted in the opening, wherein the insert component comprises:
   - a tubular body extending along a longitudinal axis between a first end portion and a second end portion and defining a hole, the tubular body being provided with an inner surface facing the hole and an outer surface opposite the inner surface, wherein the inner surface comprises a pre-mounting element and/or a locking element,
   - a sealing element surrounding the outer surface of the tubular body and destined to be arranged in the opening, and
   - a circumference collar extending radially outward from the periphery of the first end portion and adapted to rest against a first side of a body structure,
- a lid component for cooperating with the insert component and adapted to be inserted into the hole of the insert component, wherein the lid component comprises a cylindrical general shape with a top side and a lateral side, wherein the lateral side has an outer locking contour and an outer pre-mounting contour,
wherein the lid component is moveable relative to the insert component along the longitudinal axis between a pre-mounted position, in which the pre-mounting contour cooperates with the pre-mounting element and the lateral side of the lid component is partly inserted into the hole, and a locked position, in which the locking contour cooperates with the locking element and the lateral side of the lid component is entirely inserted into the hole and urges the sealing element radially outward.

Such closing plug is easy to manufacture and easy to use with two components cooperating together. The insert component and the lid component can be manufactured separately and then be mounted together, first in a pre-mounted position and then in a locked position, in which both the insert component and the lid component are fastened to each other. The pre-mounted position avoids any loss of parts. The manipulation of the closing plug before its assembly is also easy.

Moreover, such closing element has good sealing performance. The sealing element is adapted to be arranged in the opening and radially extends in the opening to provide a radial sealing. The sealing is thus provided on the wall (or edge) defining the opening. The sealing surface is therefore extended to the wall defining the opening, which allows a good compactness of the closing plug without decreasing the sealing performances. The closing plug can be used for car bodies or workpieces having different thickness or with openings having different diameters. For example, such closing element can be used for car bodies or workpieces having a thickness between 0.7 mm (millimeters) and 3 mm (millimeters).

In some embodiments the tubular body and the circumference collar are a one piece component.

In some embodiment, the sealing element is overmoulded on at least a portion of the shell surface of the insert component.

In some embodiments, the sealing element is overmoulded on the outer surface of the tubular body. The overmoulding is easy to implement and allows the insert component to be a one-piece component with two different materials. The material of the sealing element can thus be chosen to have good sealing performance, whereas the material of the tubular body and the circumference collar can be more resistant (or durable). This allow an extension of the service life of such closing plugs.

In some embodiments, a first sealing joint is provided between the lid component and the insert component, the first sealing joint being located between the top side and the sealing element. The first sealing joint ensure a tight connection between the insert component and the lid component.

In some embodiments, the tubular body and the circumference collar are made of polyamide material.

In some embodiments, the sealing element is made of thermoplastic elastomer (TPE) material. The TPE allows good sealing performance. The sealing element is made in a material more flexible than the rest of the insert component.

In some embodiments, the tubular body comprises a plurality of latching tongues extending from the first end portion to the second end portion. The latching tongues may extend without any constraints along and toward the longitudinal axis.

In some embodiments, the latching tongues have different lengths along the longitudinal axis. The different lengths allow a better control of the mounting force needed to fasten the lid component to the insert component. More particularly, the different lengths allow reducing the mounting forces without reducing the holding forces in the locked position.

In some embodiments, the inner surface of the tubular body comprises discontinuities which form the pre-mounting element and the locking element. The pre-mounting element and the locking element are thus directly integrated in the inner surface of the tubular body and are not separated elements.

In some embodiments, the pre-mounting element cooperates together with the pre-mounting contour in the pre-mounted position and/or the locking element cooperates together with the locking contour in the locked position in a form-locking manner. The shapes of the pre-mounting element, the locking element, the pre-mounting contour and/or the locking contour allow this cooperation.

In some embodiments, the top side of the lid component comprises a rim. The insert component comprises an interface portion arranged between the circumference collar and the tubular body. The rim rests against the interface portion in the locked position. This provide a sealing plan between the lid component and the insert component.

In some embodiments, the top side of the lid component comprises a groove arranged in the continuity of the lateral side. This provides more elasticity to the lid component and allows to reduce or better control the forces needed to insert the lid component in the insert component.

In some embodiments, the top side of the lid component comprises a cavity. The cavity comprises a square or a hexagonal diameter. The cavity may be used to mount and/or dismount the closing plug in the opening. For the disassembly, the inner surface of the insert component may be provided with a notch, in order to simplify the disassembly. The cavity may also be used to automate the insertion of the closing plug in the opening. The process automation could reduce the costs, increase the speed of the process and the precision of the insertion of the closing plug in the opening. Indeed, with the present closing plug in two components, the exact trajectory needed to move the lid component from the pre-mounted position to the locked position may be calculated and an automate could reproduce the same exact trajectory for many cycles, allowing a good repeatability and allowing to ensure that the lid component is indeed in the locked position and not blocked in another position between the pre-mounted position and the locked position.

In some embodiments, a supporting surface is provided between the cavity and the groove. The supporting surface may also be useful for the assembly or to push the lid component from the pre-mounted position to the locked position.

In some embodiments, the lateral side of the lid component comprises a continuous contour. In other words, the lateral side of the lid comprises a continuous inner and/or outer surface without through holes.

In some embodiments, the pre-mounting contour and/or the locking contour comprises a ring and/or a notch. Rings and notches are easy to manufacture. The pre-mounting contour and/or the locking contour may comprise a plurality of rings and/or notches.

In some embodiments, the pre-mounting element and/or the locking element comprises a protrusion. The pre-mounting element and/or the locking element may comprise a plurality of protrusions and/or surface discontinuities.

In some embodiments, the pre-mounting contour is arranged at a free end of the lateral side. The pre-mounting contour cooperate with a pre-mounting element of the tubular body in the pre-mounted position. The pre-mounting contour extends outside of the hole in the locked position. Thus, the pre-mounting contour may not interfere with the insert element in the locked position.

In some embodiments, the hole in the tubular body is a through hole. It allows to use less material and to reduce the weight of the sealing plug.

In some embodiments, the lateral side of the lid component comprises a plurality of resilient hooks which forms the pre-mounting contour and cooperate with the pre-mounting element in the pre-mounted position.

In an additional embodiment, the lateral side of the lid component comprises a plurality of side walls, the side walls being arranged between the resilient hooks.

In some additional embodiments, the side walls comprises an outer surface with a deflected portion, the deflected portion forming the locking contour of the lid component.

In some embodiments, the hole in the tubular body is a blind hole. It provides better acoustic performances and less dirt accumulation.

In some embodiments, the sealing element entirely covers the tubular body.

According to another embodiment of the invention there is provided a closing plug assembly with a closing plug such as already described and a body structure, in particular a car body structure, having an opening, wherein the closing plug is inserted in the opening. A second sealing joint is provided between the opening and the closing plug.

Other characteristics and advantages of the invention will readily appear from the following description of embodiments, provided as non-limitative examples, in reference to the accompanying drawings.

In the drawings:
Fig. 1 shows an exploded perspective view of a closing plug of the present invention with a lid component and an insert component;
Fig. 2 shows a cross sectional view of the closing plug in Fig. 1 in a pre-mounted position;
Fig. 3 shows a cross sectional view of the closing plug in Fig. 1 in a locked position;
Fig. 4 shows a cross sectional view of the detail of Fig. 3;
Fig. 5 shows an exploded perspective view of the sealing plug of Fig. 1 with an alternative lid component;
Fig. 6 shows a cross sectional view of the closing plug in Fig. 5 in a pre-mounted position;
Fig. 7 shows an alternative embodiment of the insert component of Fig. 1;
Fig. 8A and Fig. 8B show alternatives embodiments of the lid component of Fig. 1;
Fig. 9 shows a further embodiment of the insert component of Fig. 1 without sealing element;
Fig. 10 shows an exploded perspective view of another embodiment of a closing plug of the present invention;
Fig. 11 shows a cross sectional view of the closing plug in Fig. 5 in a pre-mounted position;
Fig. 12 shows a cross sectional view of the closing plug in Fig. 5 in a locked position;
Fig. 13 shows a cross sectional view of the detail of Fig. 12.

On the different figures, the same reference signs designate identical or similar elements.

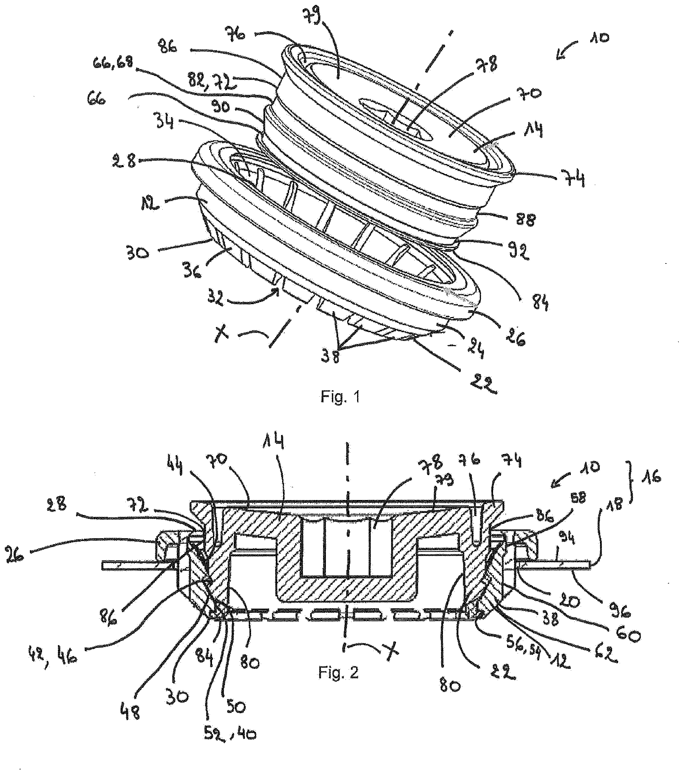

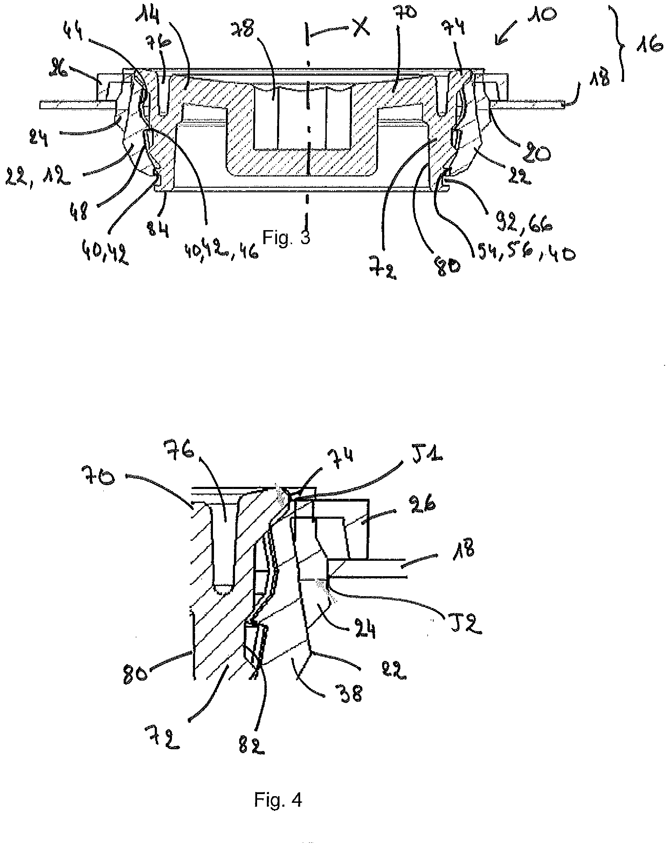

Referring firstly to Fig. 1 to 9, there is show a closing plug 10 having an insert component 12 and a lid component 14. The closing plug is adapted to be used in a closing plug assembly 16, as shown in Fig. 2 and Fig. 3.

The closing plug assembly 16 comprises the closing plug 10 and a workpiece or body structure 18 having an opening 20. In particular the body structure 18 is a motor vehicle body structure. The closing plug 10 is adapted to be inserted in the opening 20 and to be firmly held there. The closing plug 10 is used for tight closure of the opening 20.

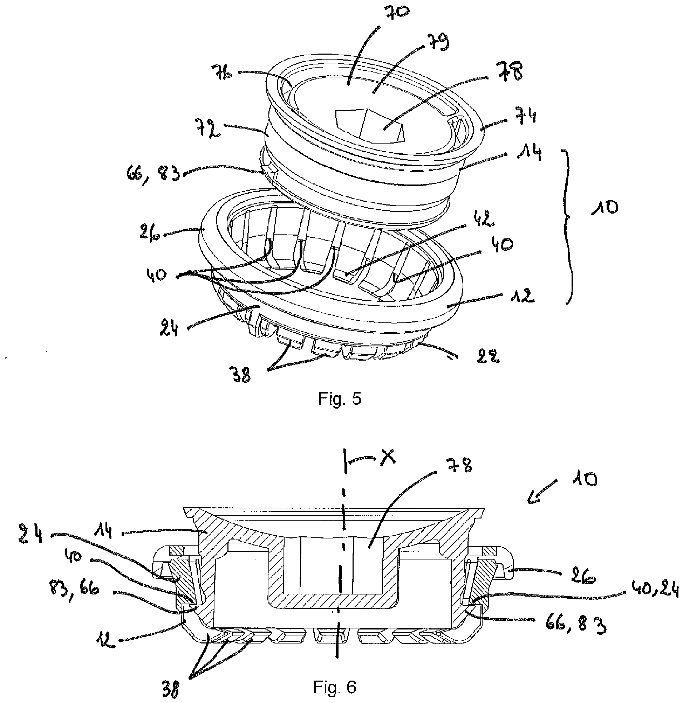

The lid component 14 is adapted to cooperate with the insert component 12 in a pre-mounted position (shown in Fig. 2 or in Fig. 6) and in a locked position (shown in Fig. 3). The lid component 14 is movable between the pre-mounted position and the locked position. In the pre-mounted position, the closing plug 10 may be inserted into the opening 20. The lid component 14 is then retained in the pre-mounted position until a manipulator or an actuator moves said lid component 14 in the locked-position. In the locked-position the closing plug 10 tightly closes, in a radial direction, the opening 20. In other words, the closing plug 10, in the locked position of the lid component, reliably seals against the edge of the opening 20. The closing plug 10 is thus firmly held in the opening 20.

The insert component 12, as shown in Fig. 1 to Fig. 3, comprises a tubular body 22, a sealing element 24 and a circumference collar 26.

The tubular body 22 extends along a longitudinal axis X between a first end portion 28 and a second end portion 30. The tubular body 22 defines a hole 32. The hole 32 is delimited by an inner surface 34 of the tubular body 22. The hole 32 in Fig. 1, Fig. 2 and Fig. 3 is a through hole. The tubular body 22 is also provided with an outer surface 36, opposite the inner surface 34.

As seen in Fig. 1, Fig.2, Fig. 3, Fig. 5, Fig. 6 and Fig. 7, the tubular body 22 comprises a plurality of latching tongues 38. For example, the latching tongues 38 form the tubular body 22. The latching tongues 38 each extends from the first end portion 28 to or toward the second end portion 30 along the longitudinal axis X. The latching tongues 38 extends without constraints radially inward (i.e. toward the longitudinal axis X).

The inner surface 34 of the tubular body 22 (or of the latching tongues 38) is provided with a pre-mounting element 40 and/or a locking element 42. For instance, the latching tongues 38 are identical and are each provided with a pre-mounting element 40 and a locking element 42. Thus, the tubular body comprises a plurality of pre-mounting elements 40 and locking elements 42.

Several embodiments of the pre-mounting element 40 and the locking element 42 might be used. The surface condition of the inner surface of the tubular body 22 may be the pre-mounting and/or the locking element. The pre-mounting element 40 and the locking element 42 of the insert component 12 may be surface discontinuities. For example, the pre-mounting element 40 and the locking element 42 may be protrusions and/or recesses which cooperate with other parts or surfaces of the lid component in order to maintain or to force the lid component in the pre-mounted position or in the mounted position.

More particularly, as better shown in Fig. 2, the inner surface of each latching tongue 38 may extend along the longitudinal axis X from the first end portion 28 to the second end portion 30, when no constraint is applied to the insert element, as follow: a first portion 44 with a first slot is provided and extends up to a first slope discontinuity 46. The first slope discontinuity 46 forms a first tip. After the first slope discontinuity 46, a second portion 48 with a second slot (which can be identical or different from the first slot) is provided. The second portion 48 extends toward the second end portion 30 up to a second slope discontinuity 50. The first portion 44 and the second portion 48 may be oblique to the longitudinal axis X. The second slope discontinuity 50 forms a second tip. The second slope discontinuity 50 is extended by a third portion 52 which may extend parallel to the longitudinal axis X. The third portion 52 is extended by a groove 54.

Each latching tongue may have a groove 54, and all the grooves 54 may form a ring 56.

The grooves 54 or the ring 56 may form the pre-mounting element 40. The first slope discontinuity 46 and/or the second slope discontinuity 50 may form the locking element 42.

In other embodiments, the groove and/or the first slope discontinuity 46 and/or the second slope discontinuity 50 may form the pre-mounting element 40 and/or the locking element 42.

The outer surface 36 of the tubular body 22 may be along the longitudinal axis X from the first end portion 28 to the second end portion 30 as follow. A first segment surface 58 may extend from the first end portion 28. The first segment surface 58 may extend parallel to the longitudinal axis when no constraints is applied to the insert component 12. The first segment surface 58 extends up to a second segment surface 60. The second segment surface 60 is recessed with regard to the first segment surface 58. In other words, the second segment surface 60 is closer from the longitudinal axis X than the first segment surface. The second segment surface 60 may extend parallel to the longitudinal axis X when no constraints is applied to the insert component 12. A third segment surface 62 extended obliquely from the second segment surface 60 to the second end portion 30. The third segment surface 62 extends obliquely toward the longitudinal axis X.

The insert component is further provided with the circumference collar 26 extending radially outward from the periphery of the first end portion 28 and adapted to rest against a first side of a body structure 18.

The collar 26 and the tubular body 22 are a one-piece component. The collar 26 and the tubular body 22 are for example made in the same material, like a polyamide material or a glass fiber reinforced polyamide.

The latching tongues 38 are surrounded by the sealing element 24. More particularly, the sealing element 24 surrounds the outer surface 36 of the tubular body 22. For instance, the sealing element 24 extends from the first end portion 28 and surrounds the first and the second segment surfaces 58 and 60. The sealing element 24 is more particularly overmoulded on the tubular body 22. The sealing element 24 may at least partly extend within the gaps existing between the latching tongues 38. The sealing element 24 is made in an elastic material. The sealing element 24 is for example made in a thermoplastic elastomer. The length of the sealing element 24 may be variable along the longitudinal axis X. For instance, the length of the sealing element along the longitudinal axis X is longer than the height of the opening 20, in order to radially seal the entire opening 20. In other embodiments, the length might be sensibly shorter.

In an alternative embodiment, as shown in Fig. 5 and Fig. 6, the pre-mounting element 40 may be formed by the sealing element 24. More particularly, the free end of the sealing element 26 extending between the latching tongues 38 may be used as a pre-mounting element 40.

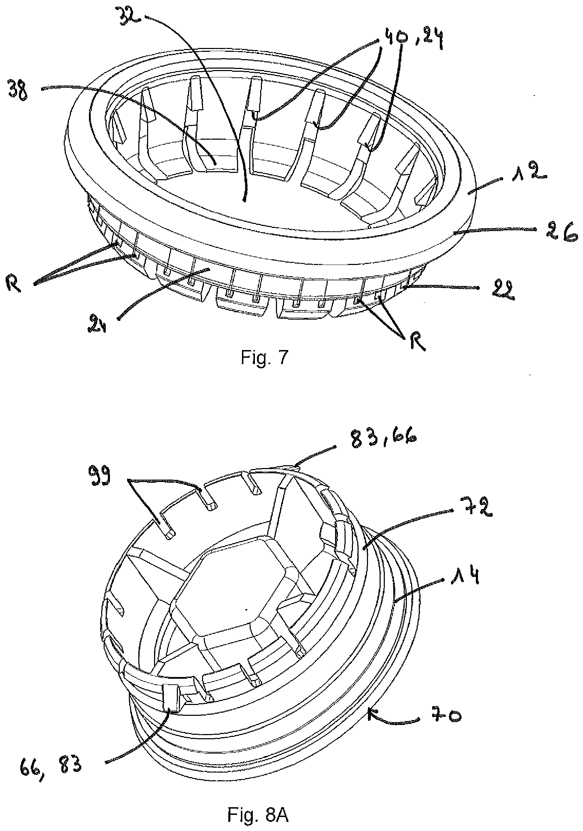

In some alternative embodiment, as shown in Fig. 7, the pre-mounting element 40 can be formed by several pre-mounting hooks. The pre-mounting hooks may be formed by the sealing element 24 and may extend inwardly toward the longitudinal axis X.

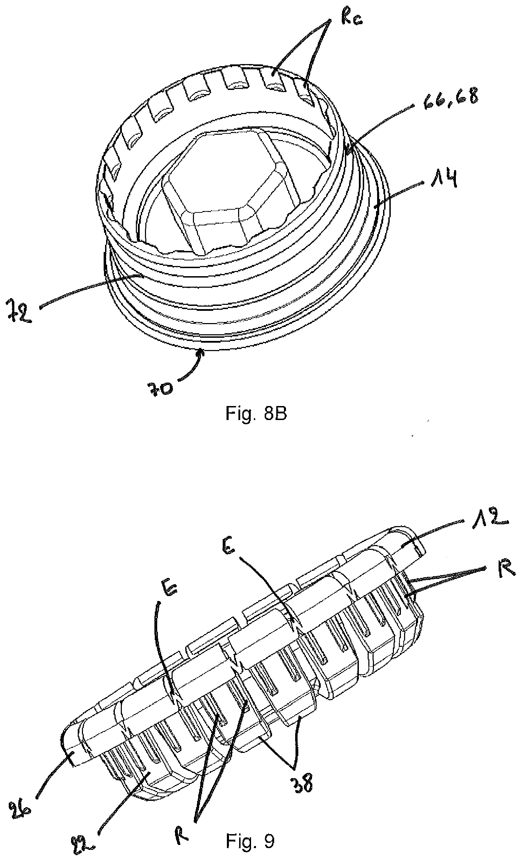

As visible in Fig. 2, Fig. 3 and Fig. 7, the sealing element 24 extends through the collar 26. The sealing element may be elastically and/or plastically deformed between the pre-mounted position and the locked position (as described below).
As visible in Fig. 7 or in Fig. 9, the outer surface of the tubular body 22 may be provided with ribs R. The ribs R allow a better fixation of the overmoulded sealing element 24. Moreover, the ribs R allow the insert component to better sit in the opening 20 with limited movement. More particularly, the ribs R may allow a better fixation in the opening and may reduce the risk of disassembly.

The insert component 12 is adapted to cooperate with the lid component 14.More particularly, the pre-mounting element 40 and the locking element 42 are adapted to cooperate with pre-mounting contour 66 and locking contour 68 of the lid component 14. The cooperation between the pre-mounting element 40 and the pre-mounting contour 66 on one hand, and between the locking element 42 and the locking contour 66 on the other hand may be a snap fit and/or a press fit assembly (or connection). For example, in the pre-mounted position, a snap fit connection may be provided. In the locked position, a press fit connection and/or a snap fit connection may be provided.

As shown in Fig. 1, Fig. 2, Fig. 3, Fig. 5, Fig. 6 and Fig. 7, the lid component 14 comprises a cylindrical general shape with a top side 70 and a lateral side 72. More particularly, the lid component 14 longitudinally extends along a lid axis, which coincides with the longitudinal axis X when the lid component 14 and the insert component 12 cooperate together. The lateral side 72 extends around the lid axis and the top side 70 may extends sensibly perpendicular to the lid axis. As disclosed in Fig. 1 to Fig. 3, the lateral side 72 continuously extends around the lid axis. In another embodiment, the lateral side 72 may discontinuously extend around the lid axis.

The top side 70 of the lid component 14 may comprise a rim 74. The rim 74 extends continuously at the circumference of the top side 70. The rim 74 comprises a first surface directed toward the lateral side 72 and a second surface opposite the first surface.

The top side 70 of the lid component 14 may comprise a groove 76 arranged in the continuity of the lateral side 72. The groove may extend along the lid axis over a third of the total length of the lid component 14.

A cavity 78 may be provided on the top side 70, on the surface opposite the lateral side 72. The cavity has for example a square or a hexagonal diameter. A tool can be used to cooperate with the cavity to drive the lid component, for example along the longitudinal axis. A supporting surface 79 may be provided between the cavity and the groove.

In some embodiments, the top side 70, on the surface opposite the lateral side 72, may be provided with an interface surface, which allows to automate the insertion of the closing plug in the opening 20 and/or the move between the pre-mounted position and the locked position.

The lateral side 72 comprises an inner and an outer surface 80, 82. The inner surface 80 bounds an aperture located below the top side, whereas the outer surface is opposite the inner surface. The pre-mounting contour 66 and the locking contour 68 are provided on the lateral side 72. More particularly, the pre-mounting contour 66 and the locking contour 68 are provided on the outer surface 82 of the lateral side 72.

The pre-mounting contour 66 and/or the locking contour 68 may be a ring and/or a notch and/or a groove. In some embodiments, the pre-mounting contour 66 and the locking contour 68 may coincide.

As best seen in Fig. 1 or Fig. 2, the outer surface 82 of the lateral side 72 may extend from the top side 70 to a free end 84 of the lid component 14 as follow. A first section 86 extending from the rim 74 toward the free end 84 is interrupted by a first groove 88. A second section 90 extends from the first groove 88 and is interrupted by a second groove 92. The second groove 92 is for example located just before the free end 84. A bulge may be provided at the interface between the first groove 88 and the second section 90.

The second groove 92 and/or the first groove 88 may form the pre-mounting contour 66 and/or the locking contour 68. For example the second groove 92 might be considered as the pre-mounting contour 66.

In other embodiments, as best seen in Fig. 5, Fig. 6 and Fig. 8A, the pre-mounting contour 66 and/or the locking contour 68 is a mounting hook 83. The mounting hook 83 is for example provided close to the free end 84 of the lateral side 72. Reinforcing elements can be provided to improve the robustness of the lid component 14.

The lid component may be made in polyamide material. For example, the lid component 14 may be made in glass fibre reinforced polyamide.

Fig. 2 shows the lid component 14 in the pre-mounted position within the insert component 12. In the pre-mounted position, the pre-mounting contour 66 cooperates with the pre-mounting element 40 and the lateral side 72 of the lid component is partly inserted into the hole 32. More specifically, the second slope discontinuity 50 cooperate with the second groove 92 to hold the lid component 14 and the insert component 12 together. In the pre-mounted position, the first slope discontinuity 46 may also cooperate with the first groove 88. A form fit connection is thus provided in the pre-mounted position.

Fig. 6 also shows a form fit connection provided in the pre-mounted position. The mounting hook 83 cooperates with a free end of the sealing element 26 extending between the latching tongues 38.

The closing plug 10 (with the lid component in the pre-mounted position) is inserted in the opening 20 of the body structure 18. The closing plug 10 and the body structure form together a closing plug assembly.

The circumference collar 26 which may comprise a circumference rim rests against a first side 94 of the body structure 18. For example, the circumference rim rests against the first side 94 of the body structure 18. The tubular body 22 partly faces (or extends beyond) a second side 96 of the body structure 18.

In the pre-mounted position, the sealing element 24 is facing the edge of the opening but may not be in contact with such edges.

To tightly close the opening 20, the lid component 14 in the pre-mounted position (as shown in Fig. 2) is moved along the longitudinal axis X toward the insert component 12 up to a locked position (shown in Fig. 3).

By moving toward the insert component 12, the lid component 14 urges the sealing element radially outward toward the edges of the opening 20. More particularly, the outer surface of the lateral side 72 pushes the inner surface of the tubular body 22 radially outward toward the edges of the opening 20. The tubular body 22 forward this motion to the sealing element 24. Simultaneously, the rim 74 presses an interface portion arranged between the collar 26 and the tubular body 22 against the first side 94 of the structure body, which makes the collar 26 being pressed against the first side 94.

Fig. 3 shows the lid component 14 in the locked-position. In this position, the locking contour 68 cooperates with the locking element 42. The lid component 14 is securely held within the insert component 12. The closing plug 10 is securely and tightly held within the opening 20. More particularly, as shown in Fig. 3 or Fig. 4, the sealing element 24 have been deformed (or expands radially) to "encapsulate" the edge of the opening, such that the sealing element 24 is press-fitted in the opening. In an embodiment, the pre-mounting contour (more particularly the second groove 92) extends outside of the hole 32 and does not cooperate anymore with the inner surface of the tubular body 22. The first slope discontinuity 46 and/or the second slope discontinuity 50 may act as locking element 42. The global contour or some element of the outer surface of the lateral side 72 may act as locking contour. The dimensions of the components allow the tight closure.

Fig. 4 is a detailed view of the detail noted IV in Fig. 3. Fig. 4 shows more precisely the position of the sealing element 24 in the mounted position of the lid component 14, and how the sealing element 24 is firmly maintained pressed against the edge of the opening 20.

Two sealing joints J1, J2 are provided in the locked position. The first sealing joint J1 is provided between the lid component 14 and the insert component 12. More particularly, the first sealing joint J1 is provided between the top side 70 and the sealing element 24. The rim 74 pushes the insert component and the sealing element 24 and form this first sealing joint J1.

The second sealing joint is provided between the edge of the opening 20 and the insert component (more particularly between the edge of the opening 20 and the sealing component).

The mounting force (in other words the forces needed to move from the pre-mounted position to the locked position) of the lid component 14 in the insert component 12 may be decreased or increased in function of the use and of the manipulation needed of the closing plug. More particularly, as visible in Fig. 8A the free end 84 of the lid component 14 can be provided with slits 99. The slits 99 decrease the surface in contact with the insert component 12 during the assembly between the pre-mounted position and the locked position. Therefore, the mounting force can be decreased. If there is no automation of the locking process, and if a manipulator has to move the lid component in the locked position, the mounting forces have to be reduced. The slits allow to reduce the mounting forces. For example the mounting forces may be up to 50 Newton.

Fig. 8B shows another embodiment with curved recesses Rc provided at the the free end 8, in the inner surface. The curved recesses Rc enable an inward expansion of the lid component.

Fig. 9 shows another embodiment adapted to reduce the mounting forces with an insert component comprising elastic arms E arranged on the collar 26.

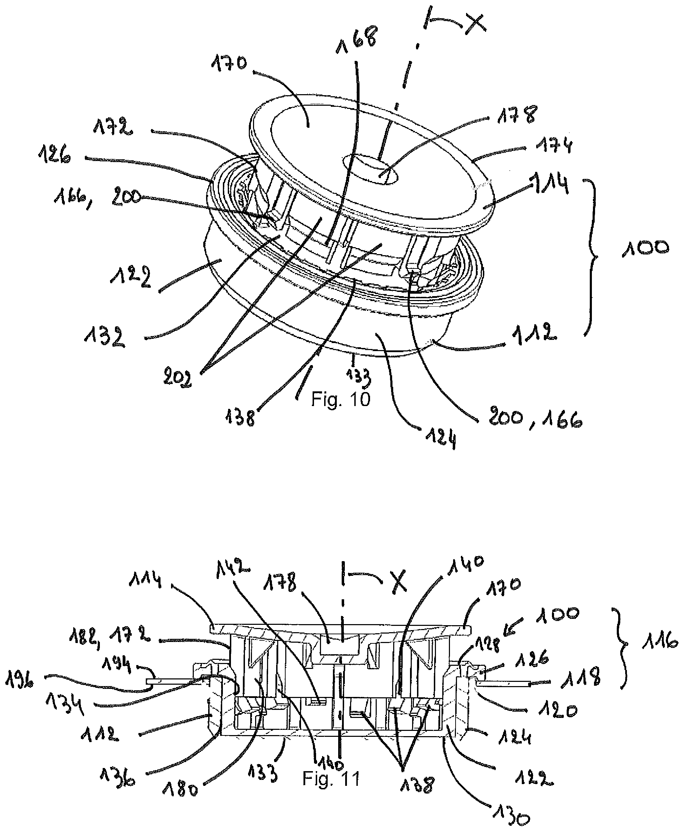

Fig. 10 to Fig. 13 show a second embodiment of a closing plug 100 according to the present invention.

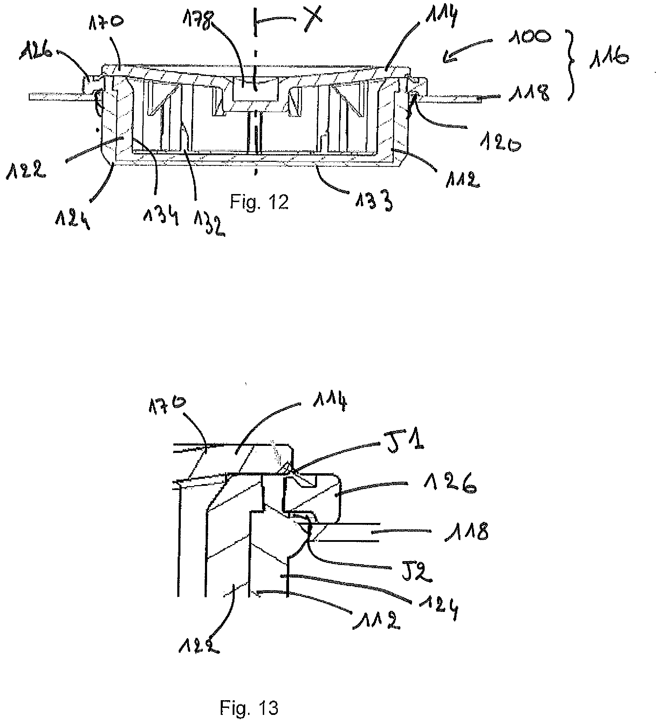

Referring to Fig. 10, there is show the closing plug 100 having an insert component 112 and a lid component 114. The closing plug 100 is adapted to be used in a closing plug assembly 116, as shown in Fig. 11 and Fig. 12, with a body structure 118 having an opening 120. The closing plug 100 is adapted to be inserted in the opening 120 and to be firmly held there through a sealing component 124. The closing plug 100 is used for tight closure of the opening 120.

The lid component 114 cooperates with the insert component 112 in a pre-mounted position (shown in Fig. 11) and in a locked position (shown in Fig. 12). In the pre-mounted position, the closing plug 100 may be inserted into the opening 120. The lid component 114 is then moved in the locked-position, in which the closing plug 100 tightly closes, in a radial direction, the opening 120.

The insert component 112, as shown in Fig. 10 to Fig. 13, comprises a tubular body 122, a sealing element 124 and a circumference collar 126.

The tubular body 122 extends along a longitudinal axis X between a first end portion 128 and a second end portion 130. The tubular body 122 defines a hole 132. The hole 132 is delimited by an inner lateral surface 134 of the tubular body 122. The hole 132 in Fig. 10, Fig. 11 and Fig. 12 is a blind hole. A bottom surface 133 is provided to close the hole 132. The tubular body 122 is also provided with an outer lateral surface 136, opposite the inner lateral surface 134.

The insert component 112 is provided with a plurality of latching tongues 138 which extends in the hole 132 toward the longitudinal axis X and are surrounded by the inner lateral surface 134. The latching tongues 138 may have different lengths along the longitudinal axis X. The different lengths 138 allow decreasing of the mounting force (in other words the forces needed to move from the pre-mounted position to the locked position) of the lid component 114 in the insert component 112.

The latching tongues 138 are provided with a pre-mounting element 140 and a locking element 142. For instance, the latching tongues1 38 are each provided with a pre-mounting element 140 and a locking element 142.

Several embodiments of the pre-mounting element 140 and the locking element 142 might be used. The pre-mounting element 140 and the locking element 142 of the insert component 112 of Fig. 10 to Fig. 13 are surface discontinuities. The pre-mounting element 140 and the locking element 142 might be protrusions and/or recesses which cooperate with other parts of the lid component in order to maintain or to force the lid component in the pre-mounted position or in the mounted position.

More particularly, as better shown in Fig. 11, the inner surface (facing the hole 132) of each latching tongue 138 may be provided with two surfaces, one being recessed with regard to the other, thus forming a discontinuity or recess which may the used as a pre-mounting element 140.

The free end of the latching tongues may be used as a locking element 142.

The insert component is further provided with the circumference collar 126 extending radially outward from the periphery of the first end portion 128 and adapted to rest against a first side of a body structure 118.

The collar 126, the latching tongues 138 and the rest of the tubular body 122 are a one-piece component. The collar 126, the latching tongues 138 and the tubular body 122 are for example made in the same material, like a polyamide material or a glass fiber reinforced polyamide.

The tubular body 122 is surrounded by the sealing element 124. More particularly, the sealing element 124 entirely surrounds the outer surface 136 of the tubular body 122 and the bottom surface 133. In another embodiment (not shown), the sealing element 124 may only partly surround the outer surface 136 of the tubular body 122.

More particularly, the sealing element is located close to the first end portion 128, in order to face the edge of the opening 120 when the closing plug 100 is inserted in the opening 120 of the body structure 118. The sealing element 124 may be overmoulded on the tubular body 122. The sealing element 124 is made in an elastic material. The sealing element 124 is for example made in a thermoplastic elastomer.

As visible in Fig. 11 and Fig. 12, the sealing element 124 may extend through the collar 126. The sealing element 124 may be elastically and/or plastically deformed between the pre-mounted position and the locked position.

The pre-mounting element 140 and the locking element 142 are adapted to cooperate with pre-mounting contour 166 and locking contour 168 of the lid component 114.

As shown in Fig. 10, Fig. 11 and Fig. 12, the lid component 114 comprises a cylindrical general shape with a top side 170 and a lateral side 172. More particularly, the lid component 114 longitudinally extends along a lid axis, which coincides with the longitudinal axis X when the lid component 114 and the insert component 112 cooperate together. The lateral side 172 extends around the lid axis and the top side 170 may extends sensibly perpendicular to the lid axis. As disclosed in Fig. 10 to Fig. 12, the lateral side 72 discontinuously extend around the lid axis. More particularly, the lateral side 172 comprises a plurality of hooks 200.

The hooks 200 may be provided at the end of a resilient arm, forming a resilient hook 200. The lateral side 172 also comprises a plurality of side walls 202. The side walls 202 are arranged between the hooks 200. For example, as shown in Fig. 10, two side walls 202 may be arranged between two hooks 200. In others embodiments, one or more than two side walls may be arranged between two resilient hooks. Without any constraint, the side walls 200 extend substantially parallel to the lid axis.

A cavity 178 may be provided on the top side 170, on the surface opposite the lateral side 172. The cavity 178 has for example a square or a hexagonal diameter.

The lateral side 172 comprises an inner and an outer surface 180, 182. The inner surface 180 bounds an aperture located below the top side 170, whereas the outer surface is opposite the inner surface. The pre-mounting contour 166 and the locking contour 168 are provided on the lateral side 172. More particularly, the pre-mounting contour 166 and the locking contour 168 are provided on the outer surface 182 of the lateral side 172. The pre-mounting contour may be formed by the resilient hooks 200. The locking contour may be formed by the side walls 202 and/or the resilient hooks 200.

The lid component 114 may be made in polyamide material. For example, the lid component 114 may be made in glass fibre reinforced polyamide.

Fig. 11 shows the lid component 114 in the pre-mounted position within the insert component 112. In the pre-mounted position, the pre-mounting contour 166 cooperates with the pre-mounting element 140 and the lateral side 172 of the lid component is partly inserted into the hole 132. More specifically, the resilient hooks 200 cooperate with the latching tongues 138 to hold the lid component 114 and the insert component 112 together. More particularly, the hooks 200 cooperate with the pre-mounting element 140 (for example with the recess in the latching tongues).

The closing plug 100 (with the lid component in the pre-mounted position) is inserted in the opening 120 of the body structure 118. The closing plug 100 and the body structure form together the closing plug assembly 116.

The circumference collar 126 which may comprise a circumference rim rests against a first side 194 of the body structure 118. For example, the circumference rim rests against the first side 194 of the body structure 118. The tubular body 122 partly faces a second side 196 of the body structure 118.

In the pre-mounted position, the sealing element 124 is facing the edge of the opening but may not be in contact with such edges.

To tightly close the opening 120, the lid component 114 in the pre-mounted position (as shown in Fig. 11) is moved along the longitudinal axis X toward the insert component 112 up to a locked position (shown in Fig. 12).

By moving toward the insert component 112, the lid component 114 urges the sealing element 124 radially outward toward the edges of the opening 120. More particularly, the side walls 202 pushes the latching tongues radially outward. The latching tongues then push the sealing element toward the edges of the opening 120. Simultaneously, the rim 174 presses an interface portion arranged between the collar 126 and the tubular body 122 against the first side 194 of the structure body 118, which makes the collar 126 being pressed against the first side 194.

Fig. 12 shows the lid component 114 in the locked-position. In this position, the locking contour 168 cooperates with the locking element 142. The lid component 114 is securely held within the insert component 112. The closing plug 100 is securely and tightly held within the opening 120. More particularly, as shown in Fig. 12 or Fig. 13, the sealing element 124 have been deformed (or expands radially) to "encapsulate" the edge of the opening 120, such that the sealing element 124 is press-fitted in the opening 120.

## Claims

1. Closing plug (10, 100) for closing an opening (20, 120), in particular in a body structure of an automobile, having:
- an insert component (12, 112) adapted to be mounted in the opening, wherein the insert component comprises:
a tubular body (22, 122) extending along a longitudinal axis (X) between a first end portion and a second end portion and defining a hole (32, 132), the tubular body (22, 122) being provided with an inner surface facing the hole and an outer surface opposite the inner surface, wherein the inner surface comprises a pre-mounting element and/or a locking element, ,
a circumference collar (26, 126) extending radially outward from the periphery of the first end portion and adapted to rest against a first side of a body structure,
- a lid component (14, 114) for cooperating with the insert component (12, 112) and adapted to be inserted into the hole of the insert component, wherein the lid component comprises a cylindrical general shape with a top side (70, 170) and a lateral side, wherein the lateral side has an outer locking contour and an outer pre-mounting contour,
wherein the lid component (14, 114) is movable relative to the insert component (12, 112) along the longitudinal axis (X) between a pre-mounted position, in which the pre-mounting contour cooperates with the pre-mounting element and the lateral side of the lid component is partly inserted into the hole, and a locked position, in which the locking contour cooperates with the locking element and the lateral side of the lid component (14, 114) is entirely inserted into the hole
**characterized in that** the insert component further comprises a sealing element (24, 124) surrounding the outer surface of the tubular body and destined to be arranged in the opening, and **in that** in the locked position the lateral side of the lid component (14, 114) urges the sealing element radially outward.

2. Closing plug (10, 100) according to claim 1, wherein the tubular body and the circumference collar are a one piece component, and wherein the sealing element is overmoulded on the outer surface of the tubular body.

3. Closing plug (10, 100) according to any of the preceding claims, wherein a first sealing joint (S1) is provided between the lid component (14, 114) and the insert component (12, 112), the first sealing joint being located between the top side (70, 170) and the sealing element (24, 124).

4. Closing plug (10, 100) according to any of the preceding claims, wherein the tubular body comprises a plurality of latching tongues (38, 138) longitudinally extending from the first end portion to the second end portion and extending toward the longitudinal axis.

5. Closing plug (10, 100) according to any of the preceding claims, wherein an inner surface of the tubular body (22) comprises discontinuities which form the pre-mounting element and the locking element.

6. Closing plug (10, 100) according to any of the preceding claims, wherein the top side of the lid component comprises a rim, wherein the insert component comprises an interface portion arranged between the circumference collar and the tubular body, and wherein the rim rests against the interface portion in the locked position.

7. Closing plug (10, 100) according to any of the preceding claims, wherein the top side of the lid component comprises a cavity, and wherein the cavity comprises a square or a hexagonal diameter.

8. Closing plug (10) according to any of the preceding claims, wherein the lateral side of the lid component comprises a continuous contour.

9. Closing plug (10, 100) according to any of the preceding claims, wherein the pre-mounting contour and/or the locking contour comprise(s) a ring and/or a notch and/or a groove.

10. Closing plug (10) according to any of the preceding claims, wherein the pre-mounting contour is arranged at a free end of the lateral side, wherein the pre-mounting contour cooperate with a pre-mounting element of the tubular body in the pre-mounted position, and wherein the pre-mounting contour extends outside of the hole in the locked position.

11. Closing plug (10) according to any of the preceding claims, wherein the hole in the tubular body is a through hole.

12. Closing plug (100) according to any of claims 1 to 7, wherein the lateral side of the lid component comprises a plurality of resilient hooks (200) which forms the pre-mounting contour and cooperate with the pre-mounting element in the pre-mounted position.

13. Closing plug (100) according to claim 12, wherein the lateral side of the lid component comprises a plurality of side walls, the side walls being arranged between the resilient hooks, and wherein the side walls comprises an outer surface with a deflected portion, the deflected portion forming the locking contour of the lid component.

14. Closing plug (100) according to any of claims 12 to 13, wherein the hole (132) in the tubular body is a blind hole.

15. Closing plug (100) according to any of claims 12 to 14, wherein the sealing element (124) entirely covers the tubular body.

## Patentansprüche

1. Verschlussstopfen (10, 100) zum Verschließen einer Öffnung (20, 120), insbesondere in einer Körperanordnung eines Automobils, aufweisend:
- eine Einsatzkomponente (12, 112), die angepasst ist, in der Öffnung montiert zu werden, wobei die Einsatzkomponente umfasst:
einen Röhrenkörper (22, 122), der sich entlang einer Längsachse (X) zwischen einem ersten Endabschnitt und einem zweiten Endabschnitt erstreckt und ein Loch (32, 132) definiert, wobei der Röhrenkörper (22, 122) mit einer Innenfläche, die zum Loch zeigt, und einer Außenfläche gegenüber der Innenfläche bereitgestellt ist, wobei die Innenfläche ein Vorbefestigungselement und/oder ein Verriegelungselement umfasst,
einen Umlaufbund (26, 126), der sich radial nach außen vom Umfang des ersten Endabschnitts erstreckt und angepasst ist, gegen eine erste Seite einer Körperanordnung zu liegen,
- eine Deckelkomponente (14, 114) zum Zusammenwirken mit der Einsatzkomponente (12, 112) und angepasst, in das Loch der Einsatzkomponente eingesetzt zu werden, wobei die Deckelkomponente eine allgemeine zylindrische Form mit einer oberen Seite (70, 170) und einer seitlichen Seite umfasst, wobei die seitliche Seite eine äußere Verriegelungskontur und eine äußere Vorbefestigungskontur aufweist,
wobei die Deckelkomponente (14, 114) relativ zur Einsatzkomponente (12, 112) entlang der Längsachse (X) relativ zwischen einer vorbefestigten Position, in der die Vorbefestigungskontur mit dem Vorbefestigungselement zusammenwirkt, und die seitliche Seite der Deckelkomponente teilweise in das Loch eingesetzt ist, und einer verriegelten Position, in der die Verriegelungskontur mit dem Verriegelungselement zusammenwirkt und die seitliche Seite der Deckelkomponente (14, 114) komplett in das Loch eingesetzt ist, beweglich ist,
**dadurch gekennzeichnet, dass** die Einsatzkomponente weiter ein Dichtungselement (24, 124) umfasst, das die Außenfläche des Röhrenkörpers umgibt und bestimmt ist, in der Öffnung angeordnet zu sein, und dadurch, dass in der verriegelten Position die seitliche Seite der Deckelkomponente (14, 114) das Dichtungselement radial nach außen zwingt.

2. Verschlussstopfen (10, 100) nach Anspruch 1, wobei der Röhrenkörper und der Umlaufbund eine einteilige Komponente sind und wobei das Dichtungselement an der Außenfläche des Röhrenkörpers umspritzt ist.

3. Verschlussstopfen (10, 100) nach einem der vorstehenden Ansprüche, wobei eine erste Dichtungsfuge (S1) zwischen der Deckelkomponente (14, 114) und der Einsatzkomponente (12, 112) bereitgestellt ist, wobei die erste Dichtungsfuge zwischen der oberen Seite (70, 170) und dem Dichtungselement (24, 124) liegt.

4. Verschlussstopfen (10, 100) nach einem der vorstehenden Ansprüche, wobei der Röhrenkörper eine Vielzahl von Riegelzungen (38, 138) umfasst, die sich längs vom ersten Endabschnitt zum zweiten Endabschnitt erstrecken und zur Längsachse erstrecken.

5. Verschlussstopfen (10, 100) nach einem der vorstehenden Ansprüche, wobei eine Innenfläche des Röhrenkörpers (22) Diskontinuitäten umfasst, die das Vorbefestigungselement und das Verriegelungselement bilden.

6. Verschlussstopfen (10, 100) nach einem der vorstehenden Ansprüche, wobei die obere Seite der Deckelkomponente einen Rand umfasst, wobei die Einsatzkomponente einen Schnittstellenabschnitt, der zwischen dem Umlaufbund und dem Röhrenkörper angeordnet ist, umfasst und wobei der Rand am Schnittstellenabschnitt in der Verriegelungsposition anliegt.

7. Verschlussstopfen (10, 100) nach einem der vorstehenden Ansprüche, wobei die obere Seite der Deckelkomponente einen Hohlraum umfasst und wobei der Hohlraum einen quadratischen oder einen hexagonalen Durchmesser umfasst.

8. Verschlussstopfen (10) nach einem der vorstehenden Ansprüche, wobei die seitliche Seite der Deckelkomponente eine kontinuierliche Kontur umfasst.

9. Verschlussstopfen (10, 100) nach einem der vorstehenden Ansprüche, wobei die Vorbefestigungskontur und/oder die Verriegelungskontur einen Ring und/oder eine Auskerbung und/oder eine Nute umfasst (umfassen).

10. Verschlussstopfen (10) nach einem der vorstehenden Ansprüche, wobei die Vorbefestigungskontur an einem freien Ende der seitlichen Seite angeordnet ist, wobei die Vorbefestigungskontur mit einem Vorbefestigungselement des Röhrenkörpers in der vorbefestigten Position zusammenwirkt und wobei die Vorbefestigungskontur sich aus dem Loch in der verriegelten Position erstreckt.

11. Verschlussstopfen (10) nach einem der vorstehenden Ansprüche, wobei das Loch im Röhrenkörper ein Durchlassloch ist.

12. Verschlussstopfen (100) nach einem der Ansprüche 1 bis 7, wobei die seitliche Seite der Deckelkomponente eine Vielzahl von elastischen Haken (200) umfasst, die die Vorbefestigungskontur bilden und mit dem Vorbefestigungselement in der vorbefestigten Position zusammenwirken.

13. Verschlussstopfen (100) nach Anspruch 12, wobei die seitliche Seite der Deckelkomponente eine Vielzahl von Seitenwänden umfasst, wobei die Seitenwände zwischen den elastischen Haken angeordnet sind und wobei die Seitenwände eine Außenfläche mit einem ausgelenkten Abschnitt umfassen, wobei der ausgelenkte Abschnitt die Verriegelungskontur der Deckelkomponente bildet.

14. Verschlussstopfen (100) nach einem der Ansprüche 12 bis 13, wobei das Loch (132) im Röhrenkörper ein Blindloch ist.

15. Verschlussstopfen (100) nach einem der Ansprüche 12 bis 14, wobei das Dichtungselement (124) den Röhrenkörper gesamt abdeckt.

## Revendications

1. Bouchon de fermeture (10, 100) pour la fermeture d'une ouverture (20, 120), en particulier dans une structure de corps d'une automobile, présentant :
- un composant d'insert (12, 112) adapté pour être monté dans l'ouverture, dans lequel le composant d'insert comprend :
un corps tubulaire (22, 122) s'étendant le long d'un axe longitudinal (X) entre une première portion d'extrémité et une seconde portion d'extrémité et définissant un trou (32, 132), le corps tubulaire (22, 122) étant doté d'une surface intérieure tournée vers le trou et une surface extérieure opposée à la surface intérieure, dans lequel la surface intérieure comprend un élément de prémontage et/ou un élément de verrouillage,
un collier circonférentiel (26, 126) s'étendant radialement vers l'extérieur depuis la périphérie de la première portion d'extrémité et adapté pour reposer contre un premier côté d'une structure de corps,
- un composant de couvercle (14, 114) pour la coopération avec le composant d'insert (12, 112) et adapté pour être inséré dans le trou du composant d'insert, dans lequel le composant de couvercle comprend une forme générale cylindrique avec un côté supérieur (70, 170) et un côté latéral, dans lequel le côté latéral présente un contour de verrouillage extérieur et un contour de prémontage extérieur,
dans lequel le composant de couvercle (14, 114) est mobile par rapport au composant d'insert (12, 112) le long de l'axe longitudinal (X) entre une position prémontée, dans laquelle le contour de prémontage coopère avec l'élément de prémontage et le côté latéral du composant de couvercle est partiellement inséré dans le trou, et une position verrouillée, dans laquelle le contour de verrouillage coopère avec l'élément de verrouillage et le côté latéral du composant de couvercle (14, 114) est entièrement inséré dans le trou,
**caractérisé en ce que** le composant d'insert comprend en outre un élément étanche (24, 124) entourant la surface extérieure du corps tubulaire et destiné à être agencé dans l'ouverture, et **en ce que** dans la position verrouillée le côté latéral du composant de couvercle (14, 114) pousse l'élément étanche radialement vers l'extérieur.

2. Bouchon de fermeture (10, 100) selon la revendication 1, dans lequel le corps tubulaire et le collier circonférentiel sont un composant d'une pièce, et dans lequel l'élément étanche est surmoulé sur la surface extérieure du corps tubulaire.

3. Bouchon de fermeture (10, 100) selon l'une quelconque des revendications précédentes, dans lequel un premier joint étanche (S1) est prévu entre le composant de couvercle (14, 114) et le composant d'insert (12, 112), le premier joint étanche étant situé entre le côté supérieur (70, 170) et l'élément étanche (24, 124).

4. Bouchon de fermeture (10, 100) selon l'une quelconque des revendications précédentes, dans lequel le corps tubulaire comprend une pluralité de languettes d'enclenchement (38, 138) s'étendant longitudinalement depuis la première portion d'extrémité à la seconde portion d'extrémité et s'étendant vers l'axe longitudinal.

5. Bouchon de fermeture (10, 100) selon l'une quelconque des revendications précédentes, dans lequel une surface intérieure du corps tubulaire (22) comprend des discontinuités qui forment l'élément de prémontage et l'élément de verrouillage.

6. Bouchon de fermeture (10, 100) selon l'une quelconque des revendications précédentes, dans lequel le corps supérieur du composant de couvercle comprend un bord, dans lequel le composant d'insert comprend une portion d'interface agencée entre le collier circonférentiel et le corps tubulaire, et dans lequel le bord repose contre la portion d'interface dans la position verrouillée.

7. Bouchon de fermeture (10, 100) selon l'une quelconque des revendications précédentes, dans lequel le côté supérieur du composant de couvercle comprend une cavité, et dans lequel la cavité comprend un diamètre carré ou un diamètre hexagonal.

8. Bouchon de fermeture (10) selon l'une quelconque des revendications précédentes, dans lequel le côté latéral du composant de couvercle comprend un contour continu.

9. Bouchon de fermeture (10, 100) selon l'une quelconque des revendications précédentes, dans lequel le contour de prémontage et/ou le contour de verrouillage comprend un anneau et/ou une encoche et/ou une rainure.

10. Bouchon de fermeture (10) selon l'une quelconque des revendications précédentes, dans lequel le contour de prémontage est agencé à une extrémité libre du côté latéral, dans lequel le contour de prémontage coopère avec un élément de prémontage du cops tubulaire dans la position prémontée, et dans lequel le contour de prémontage s'étend en dehors du trou dans la position verrouillée.

11. Bouchon de fermeture (10) selon l'une quelconque des revendications précédentes, dans lequel le trou dans le corps tubulaire est un trou traversant.

12. Bouchon de fermeture (100) selon l'une quelconque des revendications 1 à 7, dans lequel le côté latéral du composant de couvercle comprend une pluralité de crochets élastiques (200) qui forment le contour de prémontage et coopèrent avec l'élément de prémontage dans la position prémontée.

13. Bouchon de fermeture (100) selon la revendication 12, dans lequel le côté latéral du composant de couvercle comprend une pluralité de parois latérales, les parois latérales étant agencées entre les crochets élastiques, et dans lequel les parois latérales comprennent une surface extérieure avec une portion défléchie, la portion défléchie formant le contour de verrouillage du composant de couvercle.

14. Bouchon de fermeture (100) selon l'une quelconque des revendications 12 à 13, dans lequel le trou (132) dans le corps tubulaire est un trou borgne.

15. Bouchon de fermeture (100) selon l'une quelconque des revendications 12 à 14, dans lequel l'élément étanche (124) couvre entièrement le corps tubulaire.
